(19) Europäisches Patentamt / European Patent Office / Office européen des brevets

(11) **EP 3 332 474 B1**

(12) **FASCICULE DE BREVET EUROPEEN**

(45) Date de publication et mention de la délivrance du brevet:
**19.08.2020 Bulletin 2020/34**

(21) Numéro de dépôt: **16758232.9**

(22) Date de dépôt: **29.07.2016**

(51) Int Cl.:
***H02M 7/483*** (2007.01)

(86) Numéro de dépôt international:
**PCT/FR2016/051993**

(87) Numéro de publication internationale:
**WO 2017/021642 (09.02.2017 Gazette 2017/06)**

(54) **CAPACITÉ VIRTUELLE**

**VIRTUELLE KAPAZITÄT**

**VIRTUAL CAPACITANCE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2015 FR 1557501**

(43) Date de publication de la demande:
**13.06.2018 Bulletin 2018/24**

(73) Titulaires:
- **Supergrid Institute**
  **69100 Villeurbanne (FR)**
- **Institut National des Sciences Appliquées de Lyon**
  **69621 Villeurbanne Cedex (FR)**
- **CentraleSupélec**
  **91190 - Gif sur Yvette (FR)**

(72) Inventeurs:
- **SHINODA, Kosei**
  **69001 Lyon (FR)**
- **BENCHAIB, Abdelkrim**
  **78180 Montigny Le Bretonneux (FR)**

- **GUILLAUD, Xavier**
  **59830 Bachy (FR)**
- **DAI, Jing**
  **91190 Gif-sur-Yvette (FR)**

(74) Mandataire: **Cabinet Beau de Loménie**
**Immeuble Eurocentre**
**179 Boulevard de Turin**
**59777 Lille (FR)**

(56) Documents cités:
- **S. SAMIMI ET AL: "Control of DC bus voltage with a Modular Multilevel Converter", 2015 IEEE EINDHOVEN POWERTECH, 1 juin 2015 (2015-06-01), pages 1-6, XP055278812, DOI: 10.1109/PTC.2015.7232570 ISBN: 978-1-4799-7693-5**
- **S. SAMIMI ET AL: "Synthesis of different types of energy based controllers for a Modular Multilevel Converter integrated in an HVDC link", 11TH IET INTERNATIONAL CONFERENCE ON AC AND DC POWER TRANSMISSION 2015 : BIRMINGHAM, UNITED KINGDOM, 10 - 12 FEBRUARY 2015, 1 janvier 2015 (2015-01-01), XP055278671, Stevenage, UK DOI: 10.1049/cp.2015.0073 ISBN: 978-1-84919-982-7**

## Description

Arrière-plan de l'invention

La présente invention concerne le domaine technique des convertisseurs modulaires multi-niveaux (MMC) assurant la conversion d'un courant alternatif en un courant continu et inversement.

Elle concerne plus précisément les réseaux de transport haute tension à courant continu (HVDC) utilisant un courant continu pour la transmission de l'énergie électrique et dans lesquels des stations intègrent des convertisseurs modulaires multi-niveaux.

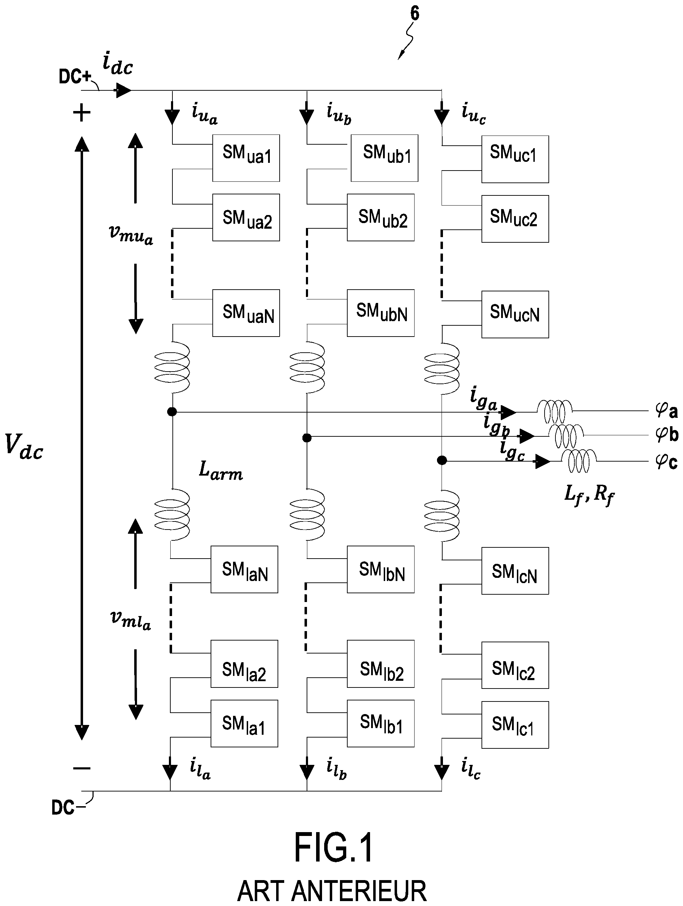

Sur la figure **1**, on a représenté de manière schématique un ensemble de sous-modules **6** d'un convertisseur modulaire multi-niveaux **2** selon la technique antérieure. Ce convertisseur **2** comporte, pour un courant triphasé d'entrée/sortie (comportant trois phases φa, φb, et φc), trois bras de conversion qui sont référencés par les indices a, b et c sur les différents composants de la figure **1**. Chaque bras de conversion comprend un demi-bras supérieur et un demi-bras inférieur (indiqués par les indices « u » supérieur et « l » pour inférieur), dont chacun relie une borne DC+ ou DC- du réseau d'alimentation électrique continu (DC) à une borne du réseau d'alimentation électrique alternatif (AC). En particulier, chacun des bras est connecté à une des trois lignes de phase φa, φb, ou φc du réseau d'alimentation électrique alternatif. Il est à noter que les termes « bras » et « demi-bras » sont traduits en anglais respectivement par « leg » et « arm ». La figure **1** représente un ensemble de sous-module **6**, dans lequel chaque demi-bras comprend une pluralité de sous-modules $SM_{xij}$ qui peuvent être commandés suivant une séquence souhaitée (avec x indiquant si le demi-bras est supérieur ou inférieur, i indiquant le bras, et j le numéro du sous-module dans les sous-modules en série dans le bras). Ici, seuls trois sous-modules ont été représentés par demi-bras. En pratique, chaque demi-bras inférieur ou supérieur peut comporter un nombre N de quelques dizaines à quelques centaines de sous-modules. Chaque sous-module $SM_{xij}$ comporte un système de stockage d'énergie tel qu'au moins un condensateur et un organe de commande pour connecter sélectivement ce condensateur en série entre les bornes du sous-module ou pour le contourner. Les sous-modules sont commandés selon une séquence choisie pour faire varier progressivement le nombre d'éléments de stockage d'énergie qui sont connectés en série dans un demi-bras du convertisseur **2** de façon à fournir plusieurs niveaux de tension. En outre, sur la figure **1**, $v_{dc}$ désigne la tension aux points de connexion du convertisseur au réseau d'alimentation électrique continu, ces points étant visés par l'expression anglo-saxonne « PCC : Point of Common Coupling », bien connue de l'homme du métier. $i_{dc}$ désigne le courant du réseau d'alimentation électrique continu, tandis que des courants $i_{ga}$, $i_{gb}$ et $i_{gc}$ *traver*sent les trois lignes de phase φa, φb, et φc. De plus, chaque demi-bras possède une inductance $L_{arm}$ et chaque ligne de phase comporte une inductance $L_f$ et une résistance $R_f$.

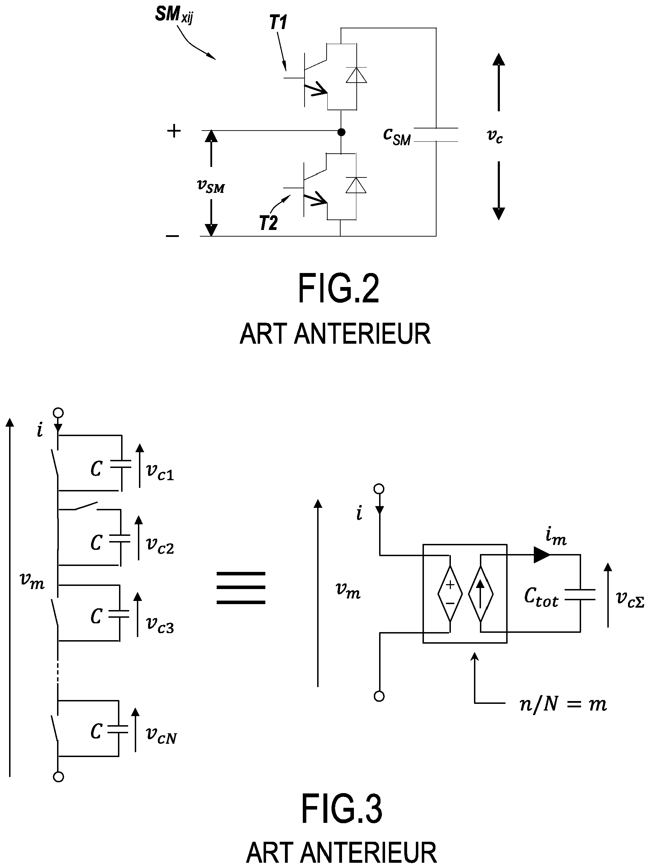

La figure **2** illustre un sous-module $SM_{xij}$ selon l'art antérieur appartenant au convertisseur de la figure **1**. Dans ce sous-module, chaque organe de commande comporte un premier élément de commutation électronique T1 tel qu'un transistor bipolaire à grille isolée (« IGBT : Insulated Gate Bipolar Transistor » en langue anglaise) connecté en série avec un élément de stockage d'une énergie électrique, ici un condensateur $C_{SM}$. Ce premier élément de commutation T1 et ce condensateur $C_{SM}$ sont montés en parallèle d'un deuxième élément de commutation électronique T2, également un transistor bipolaire à grille isolée (IGBT). Ce deuxième élément de commutation T2 est couplé entre les bornes d'entrée et de sortie du sous-module $SM_{xij}$. Les premier et deuxième éléments de commutation T1 et T2 ont chacun une diode antiparallèle représentée sur la figure **2**.

En fonctionnement, le sous-module peut être commandé dans deux états de commande.

Dans un premier état dit état « on » ou commandé, le premier élément de commutation T1 est ouvert, et le deuxième élément de commutation T2 est fermé, pour connecter l'élément de stockage d'énergie $C_{SM}$ en série avec les autres sous-modules. Dans un deuxième état dit état « off » ou non-commandé, le premier élément de commutation T1 est fermé, et le deuxième élément de commutation T2 est ouvert de sorte à court-circuiter l'élément de stockage d'énergie.

Il est connu que chaque demi-bras, ayant une tension $v_m$ à ses bornes, peut être modélisé par une source de tension modélisée, ayant une tension $v_m$ à ses bornes, dont le rapport cyclique dépend du nombre de sous-modules commandés et par un condensateur $C_{tot}$ modélisé connecté à la source de tension. Cette modélisation a été schématisée en figure **3**, sur laquelle on voit un demi-bras et la modélisation obtenue. L'inverse de la valeur de la capacité du condensateur modélisé $C_{tot}$ est égale à la somme des inverses des capacités des sous-modules commandés, de sorte que :

$$\frac{1}{C_{tot}} = \frac{1}{C_1} + \frac{1}{C_2} + \cdots + \frac{1}{C_N}$$

où $C_1$, $C_2$, ..., $C_N$ sont les capacités du j$^{ème}$ condensateur.

Ainsi, la tension $v_{c\Sigma}$ aux bornes du condensateur $C_{tot}$ modélisé est égale à la somme des tensions $v_{cj}$ aux bornes des condensateurs des sous-modules dans le demi-bras (avec j allant de 1 à N et indiquant le numéro du condensateur et donc du sous-module). Dans la présente demande, par abus de langage, $C_{tot}$ désigne à la fois le condensateur et sa valeur de capacité. En contrôlant la séquence de commande des sous-modules pour faire varier progressivement le nombre d'éléments de stockage d'énergie connectés en série, l'énergie du condensateur $C_{tot}$ modélisé et donc la tension aux bornes de chaque source de tension modélisée peuvent être diminuées ou augmentées.

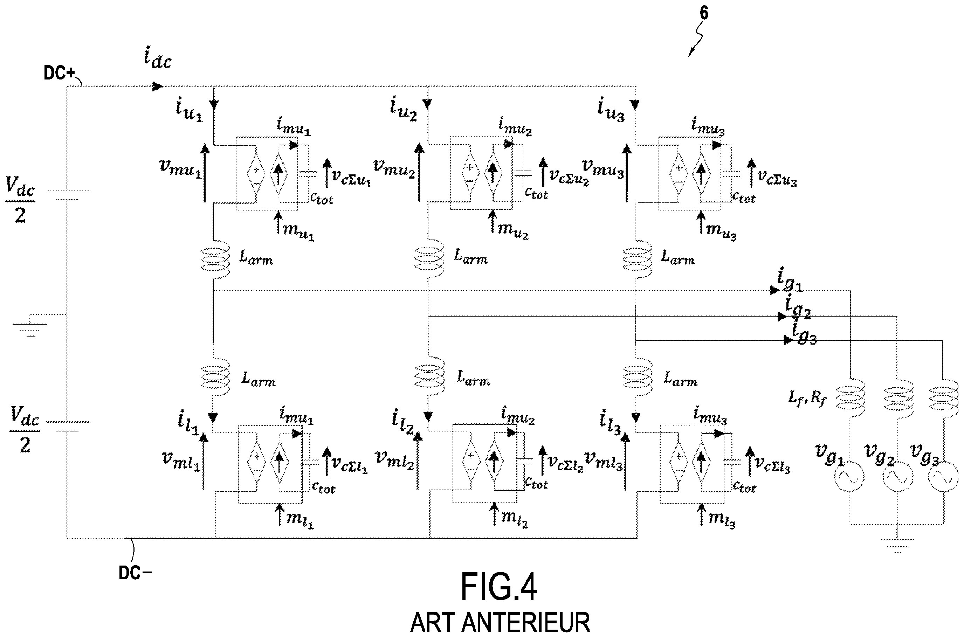

Dans l'art antérieur, on trouve donc une configuration équivalente de l'ensemble **6** des sous-modules du convertisseur MMC illustrée en figure **4**. Sur cette figure, le convertisseur est un convertisseur analogue à celui décrit en référence à la figure **1**, et dans lequel chaque demi-bras a été remplacé par sa modélisation. En outre, chaque ligne de phase est associée à un courant $i_{gi}$ et une tension $v_{gi}$ (i indiquant le numéro du bras).

Ici, chacune des sources de tension modélisées comporte en ses bornes une tension $v_{mxi}$ et chaque condensateur modélisé $C_{tot}$ comporte en ses bornes une tension $v_{c_{\Sigma xi}}$ (avec x indiquant si le demi-bras est supérieur ou inférieur et i indiquant le numéro du bras). On peut par ailleurs noter qu'il est possible de décomposer le convertisseur MMC en une partie alternative imaginaire et une partie continue imaginaire (en entrée ou en sortie, suivant que le convertisseur est configuré pour convertir une énergie alternative en énergie continue ou l'inverse), où l'évolution de l'énergie totale stockée dans les condensateurs des sous-modules est égale à la différence entre la puissance entrant dans le convertisseur et la puissance sortante.

Il est connu des convertisseurs de type « Voltage Source Converter » (bien connus de l'homme du métier sous l'acronyme « VSC »), possédant un condensateur de station connecté en parallèle du réseau d'alimentation électrique continu. L'inconvénient d'un tel condensateur en parallèle est qu'il ne permet pas un découplage du convertisseur avec la tension du réseau d'alimentation électrique continu. De plus ce type de convertisseur nécessite l'utilisation de nombreux filtres pour obtenir des signaux convertis convenables.

En outre, l'inertie du réseau d'alimentation électrique continu dépend de sa capacité, de sorte qu'une grande capacité augmente l'inertie du réseau d'alimentation électrique continu. Ainsi, une grande capacité du réseau et donc une grande inertie lui permet de mieux résister aux perturbations. Inversement, une faible capacité de réseau, et donc une faible inertie permet de réguler plus facilement et plus précisément la tension aux points de connexion du convertisseur au réseau d'alimentation électrique continu.

Or, contrairement aux convertisseurs de type Voltage Source Converter, les convertisseurs MMC ne comportent pas de condensateur de station connecté en parallèle et pouvant influer sur la stabilité du réseau d'alimentation électrique continu. Les convertisseurs modulaires multiniveaux présentent donc l'avantage d'offrir un découplage entre la tension totale des condensateurs des sous-modules et la tension du réseau d'alimentation électrique continu. Néanmoins, une simple variation de puissance pourrait mener à une grande variation de tension du réseau d'alimentation électrique continu.

On connait des convertisseurs MMC dont le contrôle n'est pas basé sur l'énergie (« Non Energy Based Control » en langue anglaise). Dans ces convertisseurs, lorsqu'un éventuel écart de tension apparait entre la tension des condensateurs des demi-bras et la tension du réseau d'alimentation électrique continu, la puissance du réseau d'alimentation électrique continu entrante varie automatiquement pour corriger ledit écart de tension. Ce contrôle s'effectue sans régulateur supplémentaire puisque les échanges d'énergies avec les condensateurs des demi-bras suivent les variations de tension sur le réseau d'alimentation électrique continu.

Toutefois, toutes les variables de ce type de convertisseurs ne sont pas contrôlées, ce qui se traduit par un manque de robustesse du convertisseur.

Il est également connu des convertisseurs dont le contrôle est basé sur l'énergie. On connait notamment le document intitulé « Control of DC bus voltage with a Modular Multilevel Converter » (Samimi et al., conférence PowerTech, 2015), qui présente un convertisseur modulaire multi-niveaux comportant un système de contrôle des transferts de puissance au niveau de la partie alternative, des transferts de puissance au niveau de la partie continue et de l'énergie interne du convertisseur. Un tel convertisseur utilise un contrôle basé sur l'énergie (« Energy Based Control » en langue anglaise) : un contrôle des variables de courant des réseaux d'alimentation électrique continu et alternatif permet de contrôler les puissances de ces deux réseaux respectifs. Une différence entre les puissances des réseaux d'alimentation électrique continu et alternatif entraine une diminution ou une augmentation de l'énergie stockée dans les condensateurs des sous-modules. Ce type de convertisseurs nuit toutefois au découplage entre les tensions aux bornes des condensateurs des sous-modules et la tension du réseau d'alimentation électrique continu. De plus, il ne permet pas de s'adapter efficacement et en temps réel aux fluctuations de tensions sur le réseau d'alimentation électrique continu.

De plus, les convertisseurs connus ne sont pas suffisamment robustes, en particulier en ce qui concerne la contribution à la la stabilité du réseau d'alimentation électrique continu.

En particulier, le contrôle de l'énergie interne est un degré de liberté supplémentaire, or aucune technique existante ne propose de solution pour réguler efficacement l'énergie interne du convertisseur.

Les solutions existantes ne permettent pas d'exploiter pleinement les capacités des convertisseurs MMC en termes de contrôle de l'énergie interne du convertisseur conjointement au contrôle de la stabilité du réseau DC.

Objet et résumé de l'invention

Un but de la présente invention est de proposer un convertisseur modulaire multi-niveaux (MMC) muni d'un module de contrôle du convertisseur qui permette d'exploiter pleinement le potentiel du convertisseur MMC en offrant une meilleure interaction entre l'énergie interne du convertisseur, stockée dans les capacités des sous-modules, et la tension du réseau d'alimentation électrique continu. Un autre intérêt du convertisseur est de permettre au convertisseur d'agir plus efficacement sur l'inertie du réseau d'alimentation électrique continu.

Pour ce faire, l'invention porte sur un convertisseur de tension modulaire multi-niveaux, permettant de convertir une tension alternative en une tension continue et inversement, comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprend un condensateur connectable en série dans le demi-bras lorsque l'organe de commande du sous-module est dans un état commandé, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé (correspondant à une capacité totale du demi-bras).

Le convertisseur comprend en outre un module de contrôle du convertisseur configuré pour réguler la tension aux bornes de chaque condensateur modélisé de chaque bras et pour réguler la tension aux points de connexion du convertisseur au réseau d'alimentation électrique continu en commandant lesdits organes de commande des sous-modules du convertisseur.

Selon une caractéristique générale du convertisseur, le module de contrôle du convertisseur comprend un calculateur d'une consigne d'énergie interne du convertisseur stockée dans les capacités des sous-modules des demi-bras par application d'une fonction ayant un paramètre d'entrée réglable, le module de contrôle étant configuré pour déduire de cette consigne d'énergie une consigne de tension aux bornes de chaque condensateur modélisé utilisée pour réguler la tension aux points de connexion du convertisseur au réseau d'alimentation électrique continu et la tension aux bornes de chaque condensateur modélisé.

Le paramètre d'entrée du calculateur peut être réglé à tout moment et de manière aisée par l'utilisateur. La consigne d'énergie interne du convertisseur dépendant du paramètre d'entrée, il est possible pour l'utilisateur d'agir directement sur le degré de contribution de l'énergie interne à la stabilité du réseau d'alimentation électrique continu.

L'utilisateur peut donc ajuster le paramètre d'entrée en fonction des perturbations du réseau d'alimentation électrique continu et augmenter ou diminuer l'inertie du réseau en fonction des besoins.

De manière non limitative, la contribution sur le réseau d'alimentation électrique du convertisseur modulaire multi-niveaux, dont le module de contrôle est muni d'un tel calculateur, est équivalente à celle d'un condensateur virtuel disposé en parallèle du réseau d'alimentation électrique continu. En réglant le paramètre d'entrée réglable du calculateur on fait virtuellement varier la capacité du condensateur virtuel. L'intérêt est de pouvoir agir sur le réseau d'alimentation électrique continu tout en maintenant le découplage entre la tension totale des condensateurs des sous-modules et la tension du réseau d'alimentation électrique continu.

Contrairement à un condensateur réellement placé en parallèle du réseau d'alimentation électrique continu, le condensateur virtuel permet de stabiliser le réseau, n'a pas de coût et ne peut pas être dégradé. En particulier, un condensateur virtuel réglable peut prendre des valeurs de capacités très élevées, ce qui n'est pas matériellement possible pour un condensateur réel.

Contrairement au convertisseur MMC du document intitulé « Control of DC bus voltage with a Modular Multilevel Converter », la capacité du condensateur virtuel est réglable au moyen du paramètre réglable. En effet, dans ce document de l'art antérieur, le convertisseur se comporte comme si six condensateurs étaient disposés en parallèle du réseau d'alimentation électrique continu et la valeur de la capacité de ces condensateurs ne peut pas être réglée. Le convertisseur selon l'invention offre donc un meilleur découplage entre les tensions aux bornes des condensateurs des sous-modules et la tension du réseau d'alimentation électrique continu. De plus, il permet de s'adapter en temps réel aux fluctuations de tensions sur le réseau d'alimentation électrique continu.

De préférence, les sous-modules sont commandés aux moyens de deux transistors bipolaires à grille isolée (IGBT) permettant de placer ou non en série le condensateur dudit sous-module dans le demi-bras associé suivant que l'on souhaite commander le sous-module dans l'état commandé « on » ou dans l'état non-commandé « off ».

Chaque demi-bras peut être modélisé par une source de tension modélisée associée en parallèle à un condensateur modélisé de capacité $C_{tot}$. On notera $v_{c\Sigma}$ la somme des tensions des condensateurs des sous-modules d'un demi-bras, de sorte que la tension aux bornes du condensateur modélisé associé en parallèle à la source de tension modélisée vaut $v_{c\Sigma}$.

De préférence, le rapport cyclique a, associé à la source de tension modélisée, est calculé d'après l'expression :

$$\alpha = \frac{n}{N}$$

où n est le nombre de sous-modules connectés à l'état « on » dans le demi-bras associé et N est le nombre de sous-modules dans le demi-bras.

En régulant conjointement la tension aux points de connexion du convertisseur au réseau d'alimentation électrique continu et la tension aux bornes de chaque condensateur modélisé, et donc l'énergie interne du convertisseur, on peut agir sur la stabilité du réseau d'alimentation électrique continu.

Ceci permet de contenir d'éventuelles perturbations en puissance apparaissant soudainement sur le réseau d'alimentation électrique continu et qui pourraient entrainer d'importantes variations de tension sur ledit réseau.

De manière non limitative, la régulation conjointe de la tension aux points de connexion du convertisseur au réseau d'alimentation électrique continu et de la tension aux bornes de chaque condensateur modélisé peut se faire par asservissement en boucle fermée de ces grandeurs au moyen de valeurs de consignes, notamment une consigne de tension aux points de connexion du convertisseur au réseau d'alimentation électrique continu. Le module de contrôle est dit « lent » par opposition avec d'autres organes de commande qu'il permet de commander et dont les temps de commutation sont très courts.

En outre, la consigne de tension $v_{c\Sigma}^{*}$ aux bornes de chaque condensateur modélisé, élevée au carré, est proportionnelle à la consigne d'énergie interne $W_{\Sigma}^{*}$ délivrée par le calculateur d'après l'expression :

$$v_{c\Sigma}^{2*} = \frac{2W_{\Sigma}^{*}}{6C_{tot}}$$

Ladite consigne d'énergie interne du convertisseur et donc ladite consigne de tension aux bornes de chaque condensateur, élevée au carré, permettent d'asservir la tension du réseau d'alimentation électrique continu et la tension aux bornes de chaque condensateur modélisé.

De manière avantageuse, le paramètre d'entrée réglable est un coefficient d'inertie virtuelle réglable $k_{VI}$. Modifier $k_{VI}$ revient ainsi à modifier virtuellement la taille de la capacité du condensateur virtuel et ainsi contribuer à la stabilité du réseau d'alimentation électrique continu. L'avantage est de proposer un degré de liberté supplémentaire dans le contrôle de l'énergie interne du convertisseur MMC. La capacité du condensateur virtuel peut notamment prendre des valeurs très élevées et ce sans contraintes matérielles supplémentaires.

Préférentiellement, le calculateur est configuré pour calculer la consigne d'énergie interne $W_{\Sigma}^{*}$ du convertisseur selon la fonction:

$$W_{\Sigma}^{*} = \frac{1}{2}6C_{tot}k_{VI}(v_{dc}^{2} - v_{dc0}^{2}) + W_{\Sigma0}^{*}$$

où $C_{tot}$ est une capacité totale du condensateur modélisé, $v_{dc}$ est une tension mesurée du réseau d'alimentation électrique continu, $v_{dc0}$ est une valeur nominale de la tension du réseau d'alimentation électrique continu et $W_{\Sigma0}^{*}$ est une consigne nominale de la valeur de l'énergie stockée dans les condensateurs du convertisseur.

On comprend que la capacité $C_{VI}$ du condensateur virtuel s'exprime :

$$C_{VI} = 6C_{tot}k_{VI}$$

En outre, le terme $(v_{dc}^{2} - v_{dc0}^{2})$ représente un écart de tension sur le réseau d'alimentation électrique continu, traduisant une perturbation en tension. On remarque donc qu'en agissant sur le coefficient d'inertie virtuelle réglable $k_{VI}$, on parvient à agir sur la variation de la tension aux points de connexion du convertisseur au réseau d'alimentation électrique continu.

De préférence, le module de contrôle comporte un régulateur de l'énergie interne du convertisseur ayant en entrée le résultat d'une comparaison entre ladite consigne de tension aux bornes de chaque condensateur modélisé, élevée au carré, et une moyenne du carré des tensions aux bornes des condensateurs modélisés, et délivrant une consigne de puissance pour les condensateurs dudit convertisseur.

Grâce au régulateur de l'énergie interne on peut donc asservir la tension aux bornes de chaque condensateur modélisé, élevée au carré, à partir d'une valeur de consigne de cette tension. La tension aux bornes de chaque condensateur modélisé, élevée au carré, étant proportionnelle à l'énergie interne du convertisseur stockée dans les condensateurs des sous-modules des demi-bras, on asservit donc la tension aux bornes de chaque condensateur modélisé à partir de la consigne d'énergie interne du convertisseur stockée dans les condensateurs des sous-modules des demi-bras fournie par le calculateur.

Avantageusement, le module de contrôle est configuré pour effectuer un changement de variable afin de contrôler des variables intermédiaires de courant $i_{diff}$ et $i_{gd}$ et de tension $v_{diff}$ et $v_{gd}$, où $i_{diff}$ et $v_{diff}$ sont associées au réseau d'alimentation électrique continu et $i_{gd}$ et $v_{gd}$ sont associées au réseau d'alimentation électrique alternatif.

Les variables intermédiaires de courant $i_{diff}$ et $i_{gd}$ peuvent être contrôlée indépendamment.

De manière non limitative, dans le cas d'un convertisseur d'énergie continue en énergie alternative, ces variables permettent d'exprimer la variation d'énergie interne du convertisseur sous la forme :

$$\frac{dW_\Sigma}{dt} = \sum_{i=1}^{3} 2i_{diff_i} v_{diff} - i_{gd} v_{gd}$$

Cette expression traduit notamment la décomposition du convertisseur MMC en une partie imaginaire continue en entrée, reliée au réseau continu et associée au terme $\sum_{i=1}^{3} 2i_{diff_i} v_{diff}$ qui correspond à la puissance de la partie continue et une partie imaginaire alternative en sortie, reliée au réseau alternatif et associée au terme $i_{gd} v_{gd}$ qui correspond à la puissance de la partie alternative.

De préférence, le module de contrôle comporte un régulateur du courant $i_{gd}$ ayant en entrée une consigne $i_{gd}^*$ correspondant au courant $i_{gd}$. Le régulateur asservit le courant $i_{gd}$ en le faisant tendre vers sa consigne $i_{gd}^*$. La régulation de la variable $i_{gd}$ revient à réguler les transferts de puissance alternative en entrée ou en sortie suivant la configuration du convertisseur.

Préférentiellement, le module de contrôle comporte un régulateur du courant $i_{diff}$ payant en entrée une consigne $i_{diff}^*$ correspondant au courant $i_{diff}$. Le régulateur asservit le courant $i_{diff}$ en le faisant tendre vers sa consigne $i_{diff}^*$. La régulation de la variable $i_{diff}$ revient à réguler les transferts de puissance continue en entrée ou en sortie suivant la configuration du convertisseur.

De manière non limitative, les variables $i_{gd}$ et $i_{diff}$ peuvent être contrôlées indépendamment. On comprend alors que réguler $i_{gd}$ et $i_{diff}$ permet de réguler les transferts de puissances entrante et sortante, et ainsi contrôler l'énergie interne du convertisseur stockée dans les condensateurs des sous-modules.

Selon un aspect particulièrement avantageux de l'invention, le module de contrôle comporte un régulateur de la tension aux points de connexion du convertisseur au réseau d'alimentation électrique continu ayant en entrée le résultat d'une comparaison entre une consigne de tension aux points de connexion du convertisseur au réseau d'alimentation électrique continu, élevée au carré, et une valeur prélevée sur le réseau d'alimentation électrique continu également élevée au carré, et délivrant une consigne de puissance de fonctionnement dudit convertisseur.

Grâce à ce régulateur, on peut donc asservir la tension aux points de connexion du convertisseur au réseau d'alimentation électrique continu $v_{dc}$ en faisant tendre sa valeur, élevée au carré, vers la consigne de tension aux points de connexion du convertisseur au réseau d'alimentation électrique continu $v_{dc}^*$, élevée au carré.

De préférence, le module de contrôle comporte un organe pour ajuster le gain du régulateur de la tension aux points de connexion du convertisseur au réseau d'alimentation électrique continu, en fonction de la valeur du coefficient d'inertie virtuelle $k_{VI}$. En effet, lorsque l'on règle le coefficient d'inertie virtuelle $k_{VI}$, afin de modifier le degré de contribution de l'énergie interne du convertisseur sur la stabilité du réseau d'alimentation électrique continu, on modifie l'inertie globale du convertisseur MMC. Ceci a pour conséquence de dérégler le fonctionnement du régulateur de la tension aux points de connexion du convertisseur au réseau d'alimentation électrique continu.

En particulier, le réglage du coefficient d'inertie virtuelle a pour conséquence de modifier une constante de temps $\tau$ associée audit régulateur de la tension aux points de connexion du convertisseur au réseau d'alimentation électrique continu. L'organe pour ajuster le gain du régulateur de la tension permet donc de corriger les écarts sur la constante de temps et sur le gain du régulateur de tension, introduits par la modification du coefficient d'inertie virtuelle $k_{VI}$, de manière à calibrer ledit régulateur de tension.

En outre, l'organe pour ajuster le gain du régulateur de tension aux points de connexion du convertisseur au réseau d'alimentation électrique continu reçoit en entrée le coefficient d'inertie virtuelle $k_{VI}$ de manière à ajuster le gain en temps réel, en fonction des modifications faites sur le $k_{VI}$.

De manière avantageuse, le module de contrôle comporte un limiteur de l'énergie interne du convertisseur ayant en entrée l'énergie interne du convertisseur, une consigne d'énergie interne maximale du convertisseur et une consigne d'énergie interne minimale du convertisseur, et délivrant une consigne de puissance de limitation.

L'intérêt est de pouvoir contenir l'énergie interne du convertisseur entre les valeurs de consigne d'énergie interne maximale du convertisseur $W_{\Sigma lim}^{+}$ et de consigne d'énergie interne minimale du convertisseur $W_{\Sigma lim}^{-}$, définies par l'opérateur. En maintenant l'énergie interne du convertisseur entre ces valeurs de consignes maximales et minimale, on protège notamment les éléments de commutation électronique, tels que les transistors. Sans cette protection, les éléments de commutation peuvent être menacés par une trop forte tension aux bornes des condensateurs des sous-modules, tandis que de trop faibles tensions aux bornes des condensateurs des sous-modules pourraient nuire au fonctionnement du convertisseur MMC.

En particulier, la consigne de puissance de limitation délivrée par le limiteur s'ajoute à la consigne de puissance de fonctionnement du convertisseur pour donner la consigne de puissance du réseau d'alimentation électrique alternatif et ainsi réguler le niveau d'énergie interne du convertisseur. Toutefois, la puissance de limitation apparait comme une perturbation sur le contrôle de l'énergie. C'est pourquoi il est nécessaire de corriger la consigne nominale de la valeur de l'énergie stockée dans les condensateurs du convertisseur qui est fournie au calculateur de la consigne d'énergie interne $W_{\Sigma}^{*}$, par exemple à l'aide d'un correcteur intégral.

L'invention porte également sur un procédé de contrôle d'un convertisseur de tension modulaire multi-niveaux, le convertisseur permettant de convertir une tension alternative en une tension continue et inversement, et comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande du sous-module et comprenant un condensateur connecté en série dans le demi-bras dans un état commandé de l'organe de commande du sous-module, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras, le procédé comprenant en outre un contrôle lent du convertisseur dans lequel on régule la tension aux bornes de chaque condensateur modélisé de chaque bras et on régule la tension aux points de connexion du convertisseur au réseau d'alimentation électrique continu en commandant lesdits organes de commande des sous-modules du convertisseur.

De manière caractéristique le procédé comprend un calcul d'une consigne d'énergie interne du convertisseur stockée dans les capacités des sous-modules des demi-bras en utilisant une fonction ayant un paramètre d'entrée réglable, et un calcul d'une consigne de tension aux bornes de chaque condensateur modélisé à partir de ladite consigne d'énergie interne du convertisseur, la consigne de tension aux bornes de chaque convertisseurs modélisé étant utilisée pour réguler la tension aux points de connexion du convertisseur au réseau d'alimentation électrique continu et la tension aux bornes de chaque condensateur modélisé.

Selon une variante, le paramètre d'entrée réglable est un coefficient d'inertie virtuelle réglable $k_{VI}$.

Selon une variante, le calcul de la consigne d'énergie interne $W_{\Sigma}^{*}$ du convertisseur est réalisé d'après la fonction:

$$W_{\Sigma}^{*} = \frac{1}{2} 6 C_{tot} k_{VI} (v_{dc}^2 - v_{dc0}^2) + W_{\Sigma 0}^{*}$$

où $C_{tot}$ est la capacité totale du condensateur modélisé dans un demi bras, $v_{dc}$ est la tension mesurée du réseau d'alimentation électrique continu, $v_{dc0}$ est la valeur nominale de la tension aux points de connexion du convertisseur au réseau d'alimentation électrique continu et $W_{\Sigma 0}^{*}$ est une consigne nominale de la valeur de l'énergie stockée dans les condensateurs du convertisseur.

Selon une variante, le procédé de contrôle comporte une régulation de la tension aux points de connexion du convertisseur au réseau d'alimentation électrique continu en utilisant en entrée le résultat d'une comparaison entre une consigne de tension aux points de connexion du convertisseur au réseau d'alimentation électrique continu, élevée au carré, et une valeur prélevée sur le réseau d'alimentation électrique continu également élevée au carré, et délivre une consigne de puissance de fonctionnement dudit convertisseur.

Selon une variante, le procédé de contrôle comporte un ajustement du gain de régulation de la tension aux points de connexion du convertisseur au réseau d'alimentation électrique continu, en fonction de la valeur du coefficient d'inertie virtuelle.

Ce procédé peut mettre en œuvre les différents modes de réalisation du convertisseur tels que décrits ci-avant.

L'invention porte également sur un module de contrôle pour un convertisseur modulaire multi-niveaux tel que défini ci-avant, et comprenant un calculateur d'une consigne d'énergie interne du convertisseur stockée dans les capacités des sous-modules des demi-bras par application d'une fonction ayant un paramètre d'entrée réglable. En outre, le module de contrôle est configuré pour déduire de cette consigne d'énergie une consigne de tension aux bornes de chaque condensateur modélisé utilisée pour réguler la tension aux points de connexion du convertisseur au réseau d'alimentation électrique continu et la tension aux bornes de chaque condensateur modélisé.

## Brève description des dessins

L'invention sera mieux comprise à la lecture de la description qui suit d'un mode de réalisation de l'invention donné à titre d'exemple non limitatif, en référence aux dessins annexés, sur lesquels :

- la figure **1**, déjà décrite, illustre un convertisseur modulaire multi-niveaux à trois phases selon la technique antérieure;
- la figure **2**, déjà décrite, illustre un sous-module d'un convertisseur modulaire multi-niveaux selon la technique antérieure ;
- la figure **3**, déjà décrite, illustre un circuit équivalent à un demi-bras d'un convertisseur MMC selon la technique antérieure ;
- la figure **4**, déjà décrite, montre une configuration équivalente d'un convertisseur modulaire multi-niveaux selon la technique antérieure;
- la figure **5** illustre une représentation équivalente et schématique d'un convertisseur modulaire multi-niveaux selon l'invention ;
- la figure **6** illustre un convertisseur modulaire multi-niveaux muni d'un module de contrôle selon l'invention ;
- la figure **7** montre un exemple d'implémentation de l'ajustement du régulateur de la tension aux points de connexion du convertisseur au réseau d'alimentation électrique continu ;
- la figure **8** montre une boucle simplifiée d'ajustement du régulateur de la tension aux points de connexion du convertisseur au réseau d'alimentation électrique continu ;
- la figure **9A** montre un échelon de puissance imposé sur un réseau alternatif pour la simulation du fonctionnement du convertisseur selon l'invention ;
- la figure **9B** illustre la réponse en tension d'un réseau continu à un échelon de puissance sur un réseau alternatif en fonction du temps pour différentes valeurs de $k_{VI}$;
- la figure **9C** illustre la variation de l'énergie totale d'un convertisseur en réponse à un échelon de puissance sur un réseau alternatif, en fonction du temps, pour différentes valeurs de $k_{VI}$;
- la figure **9D** illustre la réponse de la puissance d'un réseau continu à un échelon de puissance sur un réseau alternatif en fonction du temps pour différentes valeurs de $k_{VI}$;
- la figure **10A** illustre la réponse en tension d'un réseau continu pour un premier système de simulation consistant en un convertisseur MMC comportant une capacité virtuelle selon l'invention et pour un second système de simulation consistant en un convertisseur selon la technique antérieure muni d'un condensateur réel en parallèle du réseau continu ;
- la figure **10B** montre les variations de l'énergie totale du convertisseur pour les deux systèmes de simulation ;
- la figure **10C** montre la réponse en puissance sur le réseau alternatif des deux systèmes de simulation ;
- la figure **10D** montre la réponse en puissance sur le réseau continu des deux systèmes de simulation ; et
- la figure **11** montre un convertisseur MMC selon l'invention dans lequel le module de contrôle est muni d'un limiteur de l'énergie interne du convertisseur.

## Description détaillée de l'invention

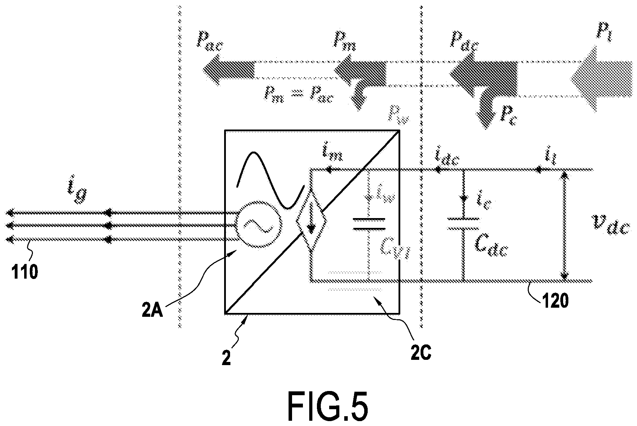

L'invention porte sur un convertisseur modulaire multi-niveaux muni d'un module de contrôle, dont un circuit du comportement équivalent est illustré en figure **5**. Sur cette figure, de manière non limitative, on a représenté un convertisseur MMC **2** d'énergie continue en énergie alternative. Dans cet exemple, on remarque que ce convertisseur **2** comporte une partie alternative **2A**, reliée au réseau d'alimentation électrique alternatif **110**, en partie gauche du schéma. En partie droite du schéma, on voit que le convertisseur **2** comporte une partie continue **2C** reliée au réseau d'alimentation électrique continu **120**.

On peut voir qu'un condensateur virtuel C$_{VI}$ de capacité réglable $C_{VI}$ (par abus de langage et pour des raisons de simplicité, on utilise la même notation pour désigner le condensateur et sa capacité) est associé en parallèle avec le réseau d'alimentation électrique continu **2C**. Par virtuel, on entend que ce condensateur n'est pas réellement présent dans le convertisseur. Par contre, le module de contrôle selon l'invention permet d'obtenir un fonctionnement de convertisseur analogue à celui d'un convertisseur équipé de ce condensateur virtuel : ce condensateur virtuel C$_{VI}$ traduit le comportement du convertisseur **2** et de son module de contrôle **4** selon l'invention. En effet, en réglant un coefficient d'inertie virtuelle $k_{VI}$, on améliore la stabilité du réseau d'alimentation électrique continu **120** et le comportement du convertisseur est analogue à celui d'un convertisseur dans lequel un condensateur virtuel C$_{VI}$ de capacité réglable $C_{VI}$ est placé en parallèle du réseau d'alimentation électrique continu **120**.

Le schéma de la figure **5** illustre également les transferts de puissances entre le convertisseur **2** et les réseaux d'alimentation électrique continu et alternatif **120** et **110**. Ainsi, $P_l$ est la puissance provenant d'autres stations du réseau d'alimentation électrique continu et symbolise une soudaine perturbation en puissance sur le réseau continu, $P_{dc}$ est la puissance extraite du réseau d'alimentation électrique continu **120**, $P_{ac}$ est la puissance transmise au réseau d'alimentation électrique alternatif **110**, $P_c$ est la puissance absorbée par la capacité $C_{dc}$ du réseau d'alimentation électrique continu **120**, $P_m$ est la puissance de fonctionnement du convertisseur **2** et $P_W$ peut être considérée comme la puissance absorbée par le condensateur virtuel C$_{VI}$ de capacité réglable $C_{VI}$. En outre $v_{dc}$ est la tension aux points de connexion du convertisseur au réseau d'alimentation électrique continu.

Dans le convertisseur MMC **2** selon l'invention, et contrairement à un convertisseur MMC de l'art antérieur, un surplus de la puissance du réseau d'alimentation électrique continu **120**, notée $P_w$, est absorbée par le condensateur virtuel C$_{VI}$ et permet au convertisseur de stocker de l'énergie interne $W_\Sigma$.

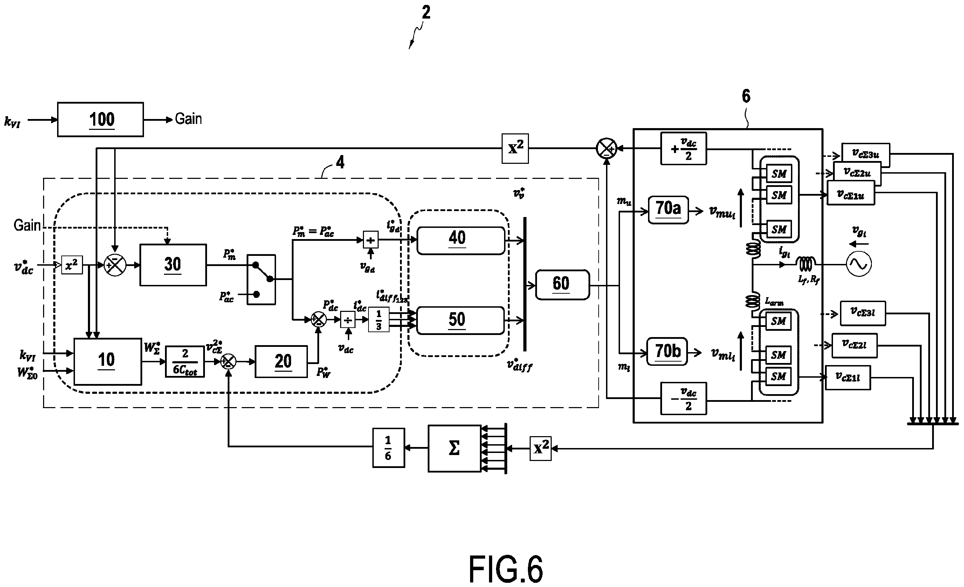

L'exemple de la figure **6** illustre un convertisseur modulaire multi-niveaux **2** muni d'un module de contrôle **4** selon l'invention. Le convertisseur MMC est configuré pour réguler, par asservissement en boucle fermée, la tension aux points de connexion du convertisseur au réseau d'alimentation électrique continu **120** $v_{dc}$ et la tension $v_{c\Sigma}$ aux bornes de chaque condensateur modélisé.

Le module de contrôle **4** comporte un calculateur **10** qui calcule une consigne d'énergie interne $W_\Sigma^*$ du convertisseur **2** stockée dans les capacités des sous-modules des demi-bras à partir d'un coefficient d'inertie virtuelle réglable $k_{VI}$, d'une consigne nominale de la valeur de l'énergie stockée dans les condensateurs du convertisseur $W_{\Sigma 0}^*$, d'une tension mesurée du réseau d'alimentation électrique continu $v_{dc}$ et d'une valeur nominale de la tension aux points de connexion du convertisseur au réseau d'alimentation électrique continu $v_{dc0}$.

D'après le schéma de la figure **5**, on constate que :

$$P_l - P_{dc} = P_c = \frac{dW_{dc}}{dt} = \frac{1}{2}C_{dc}\frac{dv_{dc}^2}{dt}$$

où $W_{dc}$ est l'énergie du réseau d'alimentation électrique continu.

Toujours sur la figure **5**, en supposant que $P_m$ est égal à $P_{ac}$, on constate également que :

$$P_{dc} - P_{ac} = P_W = P_{dc} - P_m = \frac{dW_\Sigma}{dt} = \frac{1}{2}6C_{tot}\frac{dv_{c\Sigma}^2}{dt}$$

où $C_{tot}$ est la capacité du condensateur modélisé dans un demi bras.

En combinant les deux équations précédentes on parvient à l'expression suivante :

$$P_l - P_m = P_c + P_W = \frac{1}{2}C_{dc}\frac{dv_{dc}^2}{dt} + \frac{dW_\Sigma}{dt}$$

Cette expression montre notamment qu'en contrôlant l'énergie interne $W_\Sigma$ du convertisseur MMC, on peut distribuer la puissance $P_l$ - $P_m$ entre la capacité $C_{dc}$ du réseau d'alimentation électrique continu et les capacités des sous-modules des demis-bras.

Le calculateur permet de calculer la consigne d'énergie interne $W_\Sigma^*$ appropriée d'après la fonction :

$$W_{\Sigma}^* = \frac{1}{2} 6 C_{tot} k_{VI} (v_{dc}^2 - v_{dc0}^2) + W_{\Sigma 0}^*$$

Ladite consigne d'énergie interne $W_{\Sigma}^*$ du convertisseur permet de fournir une consigne de tension $v_{c\Sigma}^*$ aux bornes de chaque condensateur modélisé. Cette consigne de tension $v_{c\Sigma}^*$ aux bornes de chaque condensateur modélisé, élevée au carré, est elle-même comparée à une moyenne du carré des tensions aux bornes des condensateurs modélisés.

Sans sortir du cadre de l'invention, la moyenne peut être calculée de n'importe quelle manière. Dans l'exemple non limitatif illustré en figure **6**, la moyenne est calculée comme étant la somme des carrés des tensions des condensateurs modélisés dans chaque demi-bras, divisée par six (le convertisseur comportant six demi-bras). Ladite comparaison est fournie à un régulateur de l'énergie interne du convertisseur **20** qui délivre une consigne de puissance $P_w^*$ pour les condensateurs dudit convertisseur **2**.

En outre, en considérant que la régulation de l'énergie est suffisamment rapide, on obtient :

$$P_l - P_m = P_c + P_W = \frac{1}{2} C_{dc} \frac{dv_{dc}^2}{dt} + \frac{1}{2} 6 C_{tot} k_{VI} \frac{dv_{dc}^2}{dt}$$

ou encore :

$$P_l - P_m = \frac{1}{2} (C_{dc} + C_{VI}) \frac{dv_{dc}^2}{dt}$$

On peut donc exprimer le coefficient d'inertie virtuelle $k_{VI}$ sous la forme :

$$C_{VI} = 6 C_{tot} k_{VI}$$

Cette expression montre qu'en réglant le coefficient d'inertie virtuelle $k_{VI}$ on parvient à modifier la valeur de la capacité virtuelle $C_{VI}$.

Sur la figure **6**, on remarque également que le module de contrôle **4** comprend un régulateur **30** de la tension aux points de connexion du convertisseur au réseau d'alimentation électrique continu **120**, ayant en entrée le résultat d'une comparaison entre une consigne de tension aux points de connexion du convertisseur au réseau d'alimentation électrique continu $v_{dc}^*$, élevée au carré, et une valeur prélevée sur le réseau d'alimentation électrique continu $v_{dc}$, également élevée au carré. Le régulateur **30** de la tension aux points de connexion du convertisseur au réseau d'alimentation électrique continu **120** délivre une consigne de puissance de fonctionnement $P_m^*$ dudit convertisseur **2**.

En outre, le module de contrôle **4** comporte un régulateur du courant alternatif $i_{gd}$ **40** ayant en entrée une consigne $i_{gd}^*$, et un régulateur du courant $i_{diff}$ **50** ayant en entrée une consigne $i_{diff}^*$.

D'après la figure **3**, on sait qu'il est possible de modéliser les sous-modules d'un demi-bras par une source de tension modélisée associées en parallèle à un condensateur modélisé de sorte que les sources de tensions modélisées ont à leurs bornes une tension $v_{mxi}$ (avec x indiquant si le demi-bras est supérieur ou inférieur et i indiquant le bras).

Les régulateurs de courant **40** et **50** délivrent des consignes de tension $v_{diff}^*$ et $v_v^*$ utilisés suite à un changement de variable, par un organe de modulation **60** et deux organes d'équilibrage **70a** et **70b** au moyen d'un algorithme de contrôle (« BCA : Balancing Control Algorithm » en langue anglaise), pour délivrer les tensions $v_{mxi}$ aux bornes des sources de tensions modélisées. Ceci permet de commander ou non les sous-modules des demi-bras. On contrôle ainsi la tension aux bornes des condensateurs modélisés $v_{c\Sigma xi}$ ainsi que la tension aux points de connexion du convertisseur au réseau d'alimentation électrique continu $v_{dc}$.

En faisant varier le coefficient d'inertie virtuelle $k_{VI}$ en entrée du calculateur on peut donc influer directement sur la tension du réseau d'alimentation électrique continu $v_{dc}$ et sur l'inertie de ce réseau continu.

Dans cet exemple non limitatif, le module de contrôle **4** comporte également un organe **100** pour ajuster le gain du régulateur de la tension aux points de connexion du convertisseur au réseau d'alimentation électrique continu **120**, en fonction de la valeur du coefficient d'inertie virtuelle $k_{VI}$. Cet organe a, pour des raisons de simplicité, été représenté à l'extérieur du module de contrôle **4**, bien qu'il soit compris dans ce module de contrôle **4**.

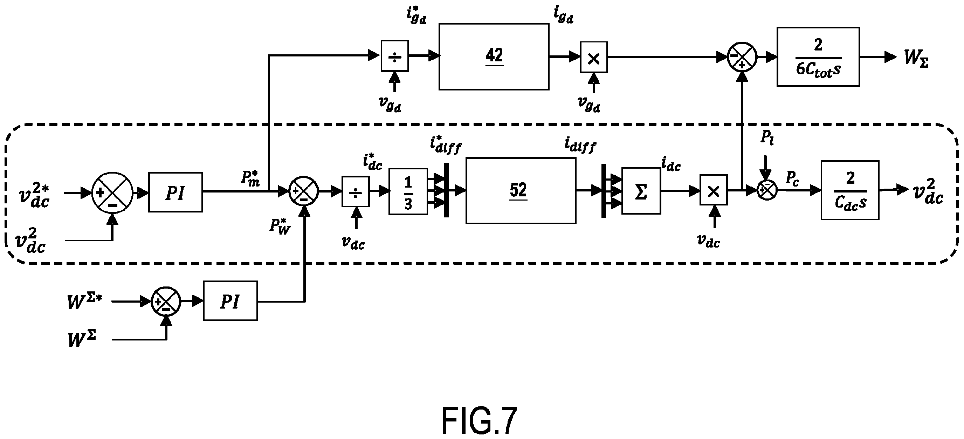

La figure **7** présente un exemple d'ajustement du régulateur de la tension aux points de connexion du convertisseur au réseau d'alimentation électrique continu $v_{dc}$ à l'aide d'un correcteur Proportionnel Intégral (**PI**) sur les boucles d'asservissement de $v_{dc}$ et de $W_\Sigma$. Dans cet exemple non limitatif, le correcteur PI est ajusté par une méthode classique de placement des pôles.

Ce circuit comporte notamment des boucles **42** et **52** de régulation des courants $i_{diff}$ et $i_{gd}$ vers leurs consignes respectives $i^*_{diff}$ et $i^*_{gd}$.

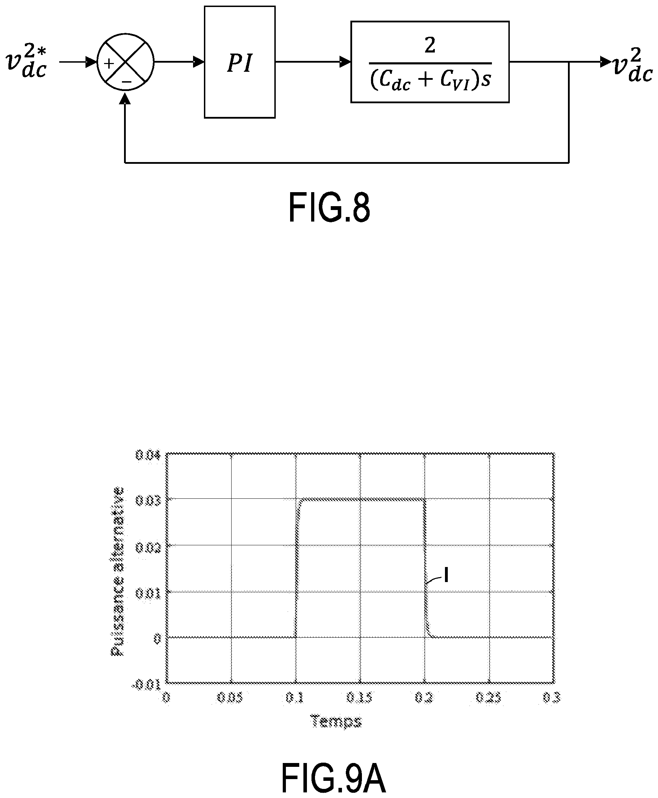

Par simplification, on peut obtenir une représentation équivalente de la boucle de régulation de la tension aux points de connexion du convertisseur au réseau d'alimentation électrique continu **120** avec ajustement du régulateur de ladite tension aux points de connexion du convertisseur au réseau continu à l'aide d'un correcteur PI. Une telle représentation est donnée en figure **8**.

Les figures **9A** à **9D** montrent les résultats d'une simulation du comportement d'un convertisseur modulaire multi-niveaux **2** muni d'un module de contrôle **4** selon l'invention et en particulier une simulation par contrôle de la puissance. Dans cette simulation, on a créé un système de test dans lequel la partie continue du convertisseur est connectée à une source de puissance continue idéale, simulant un réseau d'alimentation électrique continu **120**, tandis que la partie alternative du convertisseur est reliée à une source de puissance alternative, simulant un réseau d'alimentation électrique alternatif **110**. On impose alors un échelon de puissance sur le réseau alternatif simulé, on fait varier le coefficient d'inertie virtuel $k_{VI}$ et on observe les résultats sur les autres grandeurs du système.

Comme on peut le voir sur la figure **9A**, la courbe *l* représente un échelon de puissance de 0.03 pu, imposé au niveau du réseau alternatif simulé pendant 0.1 seconde, avant de ramener la puissance alternative à sa valeur nulle initiale. Ce comportement simule un transfert d'une puissance active depuis le convertisseur MMC **2** jusqu'au réseau d'alimentation électrique alternatif **110**.

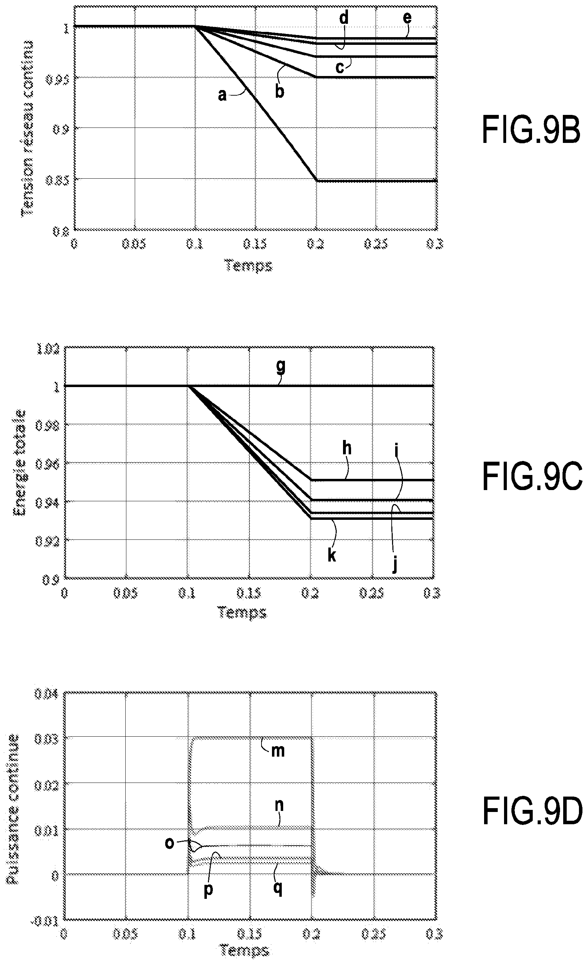

La réponse en tension du réseau continu simulé pour différentes valeurs de $k_{VI}$ est illustré en figure **9B**. Chacune des courbes correspond à une valeur de $k_{VI}$ de sorte que les courbes *a, b, c, d* et *e* correspondent à des valeurs respectives de $k_{VI}$ égales à 0, 0.5, 1, 2 et 3. On remarque que plus $k_{VI}$ *est* élevé plus les variations sur le réseau continu simulé sont faible. Ceci est en accord avec le principe de l'invention, puisque qu'en augmentant le $k_{VI}$ on augmente l'inertie du convertisseur, ce qui permet au réseau continu de contenir davantage les perturbations et stabiliser la tension du réseau continu.

La figure **9C** illustre la variation de l'énergie totale du convertisseur pour plusieurs valeurs de $k_{VI}$. Les courbes *g, h, i, j* et *k* correspondent à des valeurs respectives de $k_{VI}$ égales à 0, 0.5, 1, 2 et 3. En augmentant le coefficient d'inertie virtuel $k_{VI}$ on augmente la valeur de la capacité virtuelle ce qui implique que la contribution de l'énergie du convertisseur est plus importante et que davantage d'énergie est extraite du condensateur virtuel. Cette augmentation de la contribution de l'énergie du convertisseur se traduit donc par une baisse de l'énergie totale du convertisseur lorsque l'on augmente le coefficient d'inertie virtuelle. La conséquence est visible sur la figure **9D**, représentant l'évolution de la puissance sur le réseau continu simulé en fonction des valeurs du coefficient d'inertie virtuelle $k_{VI}$. Ici, les courbes *m, n, o, p* et *q* correspondent à des valeurs respectives de $k_{VI}$ égales à 0, 0.5, 1, 2 et 3. On constate que lorsque le coefficient d'inertie virtuel $k_{VI}$ augmente, l'impact, sur la puissance du réseau continu simulé, de la variation de puissance du réseau alternatif simulé est moindre. En particulier, moins d'énergie est extraite des condensateurs du réseau d'alimentation électrique continu. Ceci est dû au fait que davantage d'énergie est extraite du condensateur virtuel. La capacité virtuelle permet de stabiliser et d'améliorer l'inertie du réseau continu.

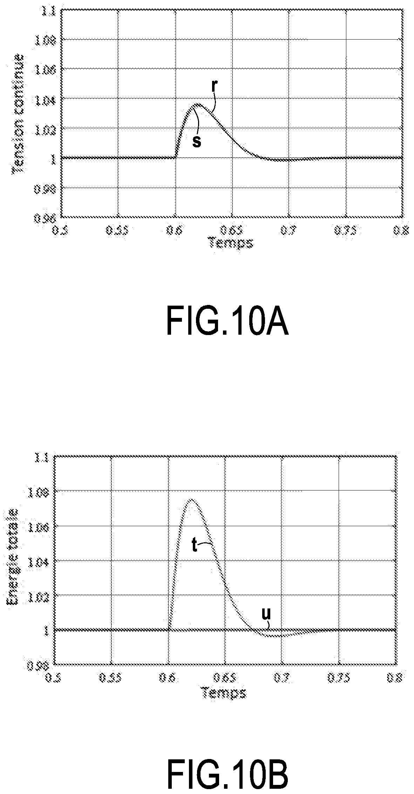

Les figures **10A** à **10D**, illustrent une simulation par contrôle de la tension aux points de connexion du convertisseur au réseau continu, dans laquelle on compare le comportement de deux systèmes. Le premier système consiste en un convertisseur modulaire multi-niveaux selon l'invention, configuré comme dans la simulation précédente. Le coefficient d'inertie virtuelle est réglé et fixé de sorte que $k_{VI} = 1$. Le second système consiste en un convertisseur MMC, selon la technique antérieure, dont la partie continue est également connectée à une source de puissance continue idéale, tandis que la partie alternative du convertisseur est reliée à une source de tension alternative. Dans ce second système, un condensateur réel est disposé en parallèle du réseau continu simulé. La valeur de la capacité de ce condensateur réel est choisie égale à la capacité du condensateur virtuel $C_{VI}$ du premier système. Il s'agit donc de comparer l'influence d'un condensateur virtuel $C_{VI}$ et d'un condensateur réel associés à un convertisseur MMC, en parallèle d'un réseau continu simulé.

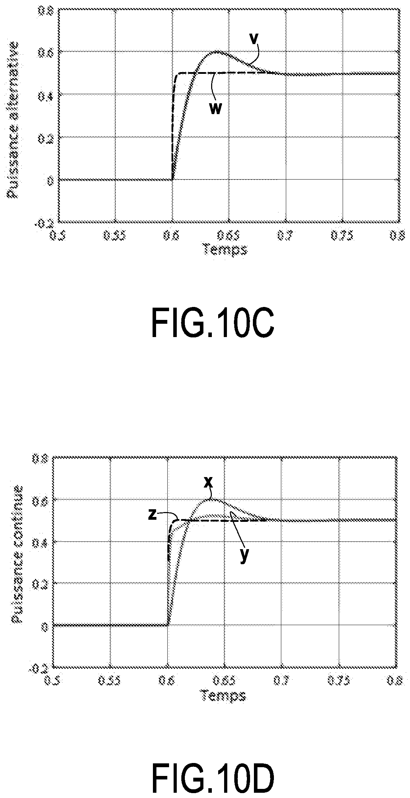

Un échelon de perturbation en puissance est imposé par la source de puissance continue sur les deux systèmes comme on peut le voir sur la courbe en pointillé *z* de la figure **10D**.

Sur la figure **10A**, les courbes *r* et *s* représentent respectivement l'évolution de la tension du réseau continu simulé pour les premier et second systèmes. On constate que l'évolution de la tension du réseau continu simulé est la même pour les deux systèmes.

Puisque les deux systèmes sont configurés pour que les valeurs des capacités réelle et virtuelle soient égales, la réponse de la puissance du réseau alternatif simulé est la même pour les deux systèmes. Cette réponse est représentée, en figure **10C**, par la courbe *v*, tandis que la courbe *w* représente l'échelon de perturbation en puissance sur le réseau continu simulé.

La figure **10B** illustre, à travers la courbe *t*, une augmentation de l'énergie totale dans le cas du premier système, muni d'une capacité virtuelle, traduisant l'énergie stockée dans le condensateur virtuel. En revanche, sur le second système représenté par la courbe *u*, on n'observe aucune variation de l'énergie totale étant donné que, pour ce convertisseur, il n'y a pas de contribution de l'énergie interne sur le réseau continu simulé.

Sur la figure **10D**, d'après les courbes *y* et *x*, représentant respectivement la puissance du réseau continu simulé pour le premier et le second système, on constate que la présence d'une capacité virtuelle améliore la réponse en puissance à une perturbation de puissance sur le réseau continu simulé, représentée par la courbe *z*. La perturbation a donc moins d'impact sur le réseau continu simulé et la puissance dudit réseau continu est mieux contrôlée.

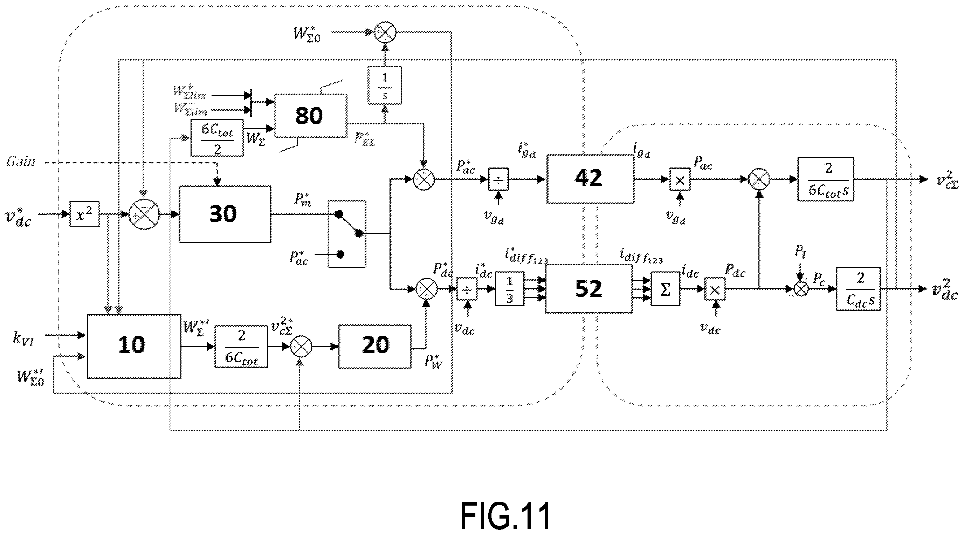

Une variante du convertisseur selon l'invention est illustrée en figure **11**, dans laquelle le module de contrôle comporte un limiteur d'énergie **80** recevant en entrée l'énergie interne $W_\Sigma$ du convertisseur, une consigne d'énergie interne maximale du convertisseur $W_{\Sigma lim}^+$ et une consigne d'énergie interne minimale du convertisseur $W_{\Sigma lim}^-$. Le limiteur d'énergie **80** délivre une consigne puissance de limitation $P_{EL}^*$ associée à une puissance de limitation $P_{EL}$. Ce limiteur d'énergie permet de borner l'énergie interne $W_\Sigma$ entre les valeurs de consigne d'énergie interne maximale et minimale du convertisseur.

La puissance de limitation $P_{EL}$ apparait comme une perturbation sur le contrôle de l'énergie. La consigne nominale $W_{\Sigma 0}^*$ de la valeur de l'énergie stockée dans les condensateurs du convertisseur est donc corrigée afin de fournir au calculateur **10** de la consigne d'énergie interne, une consigne nominale corrigée $W_{\Sigma 0}^{*\prime}$ de la valeur de l'énergie stockée dans les condensateurs.

On a désormais :

$$P_{ac} = P_m + P_{EL}$$

de sorte que :

$$P_l - P_m - P_{EL} = P_c + P_W = \frac{1}{2} C_{dc} \frac{dv_{dc}^2}{dt} + \frac{dW_\Sigma}{dt}$$

En outre la consigne nominale corrigée $W_{\Sigma 0}^{*\prime}$ de la valeur de l'énergie stockée dans les condensateurs s'exprime :

$$W_\Sigma^{\prime *} = \frac{1}{2} 6 C_{tot} k_{VI} (v_{dc}^2 - v_{dc0}^2) + W_{\Sigma 0}^{\prime *}$$

En substituant dans les équations précédentes on obtient :

$$P_l - P_m - P_{EL} = \frac{1}{2} C_{dc} \frac{dv_{dc}^2}{dt} + \frac{1}{2} 6 C_{tot} k_{VI} \frac{dv_{dc}^2}{dt} - P_{EL}$$

Soit :

$$P_l - P_m = \frac{1}{2} (C_{dc} + C_{VI}) \frac{dv_{dc}^2}{dt}$$

On constate donc que le limiteur d'énergie **80** ne modifie pas le comportement du convertisseur au sein des limites d'énergie interne maximale et minimale. Le comportement du convertisseur est analogue à celui d'un convertisseur dans lequel un condensateur virtuel C$_{VI}$ de capacité réglable $C_{VI}$ est placé en parallèle du réseau d'alimentation électrique continu **120**.

## Revendications

1. Convertisseur de tension modulaire multi-niveaux (2), permettant de convertir une tension alternative en une tension continue et inversement, comportant une partie dite continue (2C) destinée à être reliée à un réseau d'alimentation électrique continu (120) et une partie dite alternative (2A) destinée à être reliée à un réseau d'alimentation électrique alternatif (110), le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprenant un condensateur connectable en série dans le demi-bras lorsque l'organe de commande du sous-module est dans un état commandé, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras, le convertisseur comprenant en outre un module de contrôle du convertisseur configuré pour réguler la tension aux bornes de chaque condensateur modélisé de chaque bras et pour réguler la tension aux points de connexion du convertisseur au réseau d'alimentation électrique continu en commandant lesdits organes de commande des sous-modules du convertisseur, **caractérisé en ce que** le module de contrôle du convertisseur comprend un calculateur (10) d'une consigne d'énergie interne du convertisseur stockée dans les capacités des sous-modules des demi-bras par application d'une fonction ayant un paramètre d'entrée réglable, le module de contrôle étant configuré pour déduire de cette consigne d'énergie une consigne de tension aux bornes de chaque condensateur modélisé utilisée pour réguler la tension aux points de connexion du convertisseur au réseau d'alimentation électrique continu et la tension aux bornes de chaque condensateur modélisé.

2. Convertisseur selon la revendication **1**, dans lequel le paramètre d'entrée réglable est un coefficient d'inertie virtuelle réglable $k_{VI}$.

3. Convertisseur selon la revendication **2**, dans lequel le calculateur (10) est configuré pour calculer la consigne d'énergie interne $W_\Sigma^*$ du convertisseur selon la fonction:

$$W_\Sigma^* = \frac{1}{2} 6 C_{tot} k_{VI} (v_{dc}^2 - v_{dc0}^2) + W_{\Sigma 0}^*$$

où $C_{tot}$ est la capacité totale du condensateur modélisé dans un demi bras, $v_{dc}$ est la tension mesurée du réseau d'alimentation électrique continu, $v_{dc0}$ est la valeur nominale de la tension aux points de connexion du convertisseur au réseau d'alimentation électrique continu et $W_{\Sigma 0}^*$ est une consigne nominale de la valeur de l'énergie stockée dans les condensateurs du convertisseur.

4. Convertisseur selon l'une quelconque des revendications **1** à **3**, dans lequel le module de contrôle comporte un régulateur (20) de l'énergie interne du convertisseur ayant en entrée le résultat d'une comparaison entre ladite consigne de tension aux bornes de chaque condensateur modélisé, élevée au carré, et une moyenne du carré des tensions aux bornes des condensateurs modélisés, et délivrant une consigne de puissance pour les condensateurs dudit convertisseur.

5. Convertisseur selon l'une quelconque des revendications **1** à **4**, dans lequel le module de contrôle est configuré pour effectuer un changement de variable afin de contrôler des variables intermédiaires de courant $i_{diff}$ et $i_{gd}$ et de tension $v_{diff}$ et $v_{gd}$, où $i_{diff}$ et $v_{diff}$ sont associées au réseau d'alimentation électrique continu et $i_{gd}$ et $v_{gd}$ sont associées au réseau d'alimentation électrique alternatif.

6. Convertisseur selon la revendication **5**, dans lequel le module de contrôle comporte un régulateur (40) du courant $i_{gd}$ ayant en entrée une consigne $i_{gd}^*$ correspondant au courant $i_{gd}$.

**7.** Convertisseur selon l'une quelconque des revendications **5** ou **6**, dans lequel le module de contrôle comporte un régulateur (50) du courant $i_{diff}$ ayant en entrée une consigne $i^*_{diff}$ correspondant courant $i_{diff}$.

**8.** Convertisseur selon l'une quelconque des revendications **1** à **7**, dans lequel le module de contrôle comporte un régulateur (30) de la tension aux points de connexion du convertisseur au réseau d'alimentation électrique continu ayant en entrée le résultat d'une comparaison entre une consigne de tension aux points de connexion du convertisseur au réseau d'alimentation électrique continu, élevée au carré, et une valeur prélevée sur le réseau d'alimentation électrique continu également élevée au carré, et délivrant une consigne de puissance de fonctionnement dudit convertisseur.

**9.** Convertisseur selon les revendications **2** et **8**, dans lequel le module de contrôle comporte un organe (100) pour ajuster le gain du régulateur (30) de la tension aux points de connexion du convertisseur au réseau d'alimentation électrique continu, en fonction de la valeur du coefficient d'inertie virtuelle $k_{VI}$.

**10.** Convertisseur selon l'une quelconque des revendications **1** à **9**, dans lequel le module de contrôle comporte un limiteur de l'énergie interne du convertisseur ayant en entrée l'énergie interne du convertisseur, une consigne d'énergie interne maximale du convertisseur et une consigne d'énergie interne minimale du convertisseur, et délivrant une consigne de puissance de limitation.

**11.** Procédé de contrôle d'un convertisseur de tension modulaire multi-niveaux, le convertisseur permettant de convertir une tension alternative en une tension continue et inversement, et comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande du sous-module et comprenant un condensateur connecté en série dans le demi-bras dans un état commandé de l'organe de commande du sous-module, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras, le procédé comprenant en outre un contrôle lent du convertisseur dans lequel on régule la tension aux bornes de chaque condensateur modélisé de chaque bras et on régule la tension aux points de connexion du convertisseur au réseau d'alimentation électrique continu en commandant lesdits organes de commande des sous-modules du convertisseur, **caractérisé en ce qu'**il comprend un calcul d'une consigne d'énergie interne du convertisseur stockée dans les capacités des sous-modules des demi-bras en utilisant une fonction ayant un paramètre d'entrée réglable, et un calcul d'une consigne de tension aux bornes de chaque condensateur modélisé à partir de ladite consigne d'énergie interne du convertisseur, la consigne de tension aux bornes de chaque convertisseur modélisé étant utilisée pour réguler la tension aux points de connexion du convertisseur au réseau d'alimentation électrique continu et la tension aux bornes de chaque condensateur modélisé.

**12.** Procédé de contrôle d'un convertisseur selon la revendication **11**, dans lequel le paramètre d'entrée réglable est un coefficient d'inertie virtuelle réglable $k_{VI}$.

**13.** Procédé de contrôle d'un convertisseur selon la revendication **12**, dans lequel le calcul de la consigne d'énergie interne $W^*_{\Sigma}$ du convertisseur est réalisé d'après la fonction:

$$W^*_{\Sigma} = \frac{1}{2} 6 C_{tot} k_{VI} (v^2_{dc} - v^2_{dc0}) + W^*_{\Sigma 0}$$

où $C_{tot}$ est la capacité totale du condensateur modélisé dans un demi bras, $v_{dc}$ est la tension mesurée du réseau d'alimentation électrique continu, $v_{dc0}$ est la valeur nominale de la tension aux points de connexion du convertisseur au réseau d'alimentation électrique continu et $W^*_{\Sigma 0}$ est une consigne nominale de la valeur de l'énergie stockée dans les condensateurs du convertisseur.

14. Procédé de contrôle d'un convertisseur selon l'une quelconque des revendications **11** à **13**, comportant une régulation de la tension aux points de connexion du convertisseur au réseau d'alimentation électrique continu en utilisant en entrée le résultat d'une comparaison entre une consigne de tension aux points de connexion du convertisseur au réseau d'alimentation électrique continu, élevée au carré, et une valeur prélevée sur le réseau d'alimentation électrique continu également élevée au carré, et délivrant une consigne de puissance de fonctionnement dudit convertisseur.

15. Procédé de contrôle d'un convertisseur selon l'une quelconque des revendications **11** à **14**, comportant un ajustement du gain de régulation de la tension aux points de connexion du convertisseur au réseau d'alimentation électrique continu, en fonction de la valeur du coefficient d'inertie virtuelle.

**Patentansprüche**

1. Mehrstufiger modularer Spannungswandler (2), der es erlaubt, eine Wechselspannung in eine Gleichspannung umzuwandeln und umgekehrt, und einen als Gleichspannungsteil (2C) bezeichneten Teil, der dazu bestimmt ist, mit einem Gleichstromversorgungsnetz (120) verbunden zu werden, und einen als Wechselstromteil (2A) bezeichneten Teil, der dazu bestimmt ist, mit einem Wechselstromversorgungsnetz (110) verbunden zu werden, beinhaltet, wobei der Wandler mehrere Zweige umfasst, wobei jeder Zweig einen oberen Teilzweig und einen unteren Teilzweig umfasst, wobei jeder Teilzweig mehrere Teilmodule umfasst, die durch ein jedem Teilmodul eigenes Steuerelement individuell steuerbar sind, und jedes Teilmodul einen Kondensator umfasst, der in Reihe in dem Teilzweig verbunden werden kann, wenn das Steuerelement des Teilmoduls sich in einem gesteuerten Zustand befindet, wobei jeder Teilzweig durch eine modellierte Spannungsquelle modelliert werden kann, die einem Aussteuergrad zugeordnet ist, in Abhängigkeit von einer Anzahl von Kondensatoren, die in dem Teilzweig in Reihe geschaltet sind, wobei jede modellierte Spannungsquelle parallel einem modellierten Kondensator zugeordnet ist, der einer Gesamtkapazität des Teilzweigs entspricht, wobei der Wandler ferner ein Wandler-Steuermodul umfasst, das dazu ausgestaltet ist, die Spannung an den Klemmen eines jeden Kondensators eines jeden Arms zu regeln, und die Spannung an den Anschlusspunkten des Wandlers an das Gleichstromversorgungsnetz zu regeln, indem die Steuerelemente der Teilmodule des Wandlers gesteuert werden,
**dadurch gekennzeichnet, dass** das Steuermodul des Wandlers einen Berechner (10) für einen Einstellwert der inneren Energie des Wandlers umfasst, die in den Kapazitäten der Teilmodule der Teilzweige gespeichert ist, durch Anwendung einer Funktion, die einen regelbaren Eingangsparameter aufweist, wobei das Steuermodul dazu ausgestaltet ist, aus diesem Einstellwert für die Energie einen Einstellwert für die Spannung an den Klemmen eines jeden modellierten Kondensators abzuleiten, die verwendet wird, um die Spannung an den Anschlusspunkten des Wandlers an das Gleichstromversorgungsnetz und die Spannung an den Klemmen eines jeden modellierten Kondensators zu regeln.

2. Wandler nach Anspruch 1, wobei der regelbare Eingangsparameter ein virtueller regelbarer Trägheitskoeffizient $K_{VI}$ ist.

3. Wandler nach Anspruch 2, wobei der Berechner (10) dazu ausgestaltet ist, den Einstellwert der inneren Energie $W_{\Sigma}^{*}$ des Wandlers gemäß der Funktion:

$$W_{\Sigma}^{*} = \frac{1}{2} 6C_{tot} k_{VI}(v_{dc}^2 - v_{dc0}^2) + W_{\Sigma 0}^{*}$$

zu berechnen, wobei $C_{tot}$ die Gesamtkapazität des modellierten Kondensators in einem Teilzweig ist, $v_{dc}$ die gemessene Spannung des Gleichstromversorgungsnetzes ist, $v_{dc0}$ der Nennwert der Spannung an den Anschlusspunkten des Wandlers an das Gleichstromversorgungsnetz ist und $W_{\Sigma 0}^{*}$ eine Nenneinstellwert für den Wert der Energie ist, die in den Kondensatoren des Wandlers gespeichert ist.

4. Wandler nach einem der Ansprüche 1 bis 3, wobei das Steuermodul einen Regler (20) der inneren Energie des Wandlers beinhaltet, der als Eingang das Ergebnis eines Vergleichs zwischen dem Einstellwert Vorgabe der Spannung an den Klemmen eines jeden modellierten Kondensators zum Quadrat und einem Mittelwert des Quadrats der Spannungen an den Klemmen der modellierten Kondensatoren aufweist und einen Einstellwert für die Leistung für die Kondensatoren des Wandlers liefert.

5. Wandler nach einem der Ansprüche 1 bis 4, wobei das Steuermodul dazu ausgestaltet ist, eine Änderung der Variable durchzuführen, um Zwischenvariablen für den Strom $i_{diff}$ und $i_{gd}$ und für die Spannung $v_{diff}$ und $v_{gd}$ zu steuern, wobei $i_{diff}$ und $v_{diff}$ dem Gleichstromversorgungsnetz zugeordnet sind und $i_{gd}$ und $v_{gd}$ dem Wechselstromversorgungsnetz zugeordnet sind.

6. Wandler nach Anspruch 5, wobei das Steuermodul einen Regler (40) des Stroms $i_{gd}$ beinhaltet, der als Eingang einen Einstellwert $i_{gd}^{*}$ entsprechend dem Strom $i_{gd}$ aufweist.

7. Wandler nach einem der Ansprüche 5 oder 6, wobei das Steuermodul einen Regler (50) des Stroms $i_{diff}$ beinhaltet, der als Eingang einen Einstellwert $i_{diff}^{*}$ entsprechend dem $i_{diff}$ aufweist.

8. Wandler nach einem der Ansprüche 1 bis 7, wobei das Steuermodul einen Regler (30) der Spannung an den Anschlusspunkten des Wandlers an das Gleichstromversorgungsnetz beinhaltet, der als Eingang das Resultat eines Vergleichs zwischen einem Einstellwert der Spannung an den Anschlusspunkten des Wandlers an das Gleichstromversorgungsnetz zum Quadrat und einen von dem Gleichstromversorgungsnetz erhobenen Wert ebenfalls zum Quadrat aufweist und einen Einstellwert für die Arbeitsleistung des Wandlers liefert.

9. Wandler nach den Ansprüchen 2 und 8, wobei das Steuermodul ein Element (100) zum Einstellen des Verstärkungsfaktors des Reglers (30) der Spannung an den Anschlusspunkten des Wandlers an das Gleichstromversorgungsnetz in Abhängigkeit von dem Wert des virtuellen Trägheitskoeffizienten $k_{VI}$ beinhaltet.

10. Wandler nach einem der Ansprüche 1 bis 9, wobei das Steuermodul einen Begrenzer der inneren Energie des Wandlers beinhaltet, der als Eingang die innere Energie des Wandlers, einen Einstellwert der maximalen inneren Energie des Wandlers und einen Einstellwert der minimalen inneren Energie des Wandlers aufweist und einen Einstellwert der Leistung der Begrenzung liefert.

11. Verfahren zur Steuerung eines mehrstufigen modularen Spannungswandlers, wobei der Wandler es erlaubt, eine Wechselspannung in eine Gleichspannung umzuwandeln und umgekehrt, und einen als Gleichspannungsteil bezeichneten Teil, der dazu bestimmt ist, mit einem Gleichstromversorgungsnetz verbunden zu werden, und einen als Wechselstromteil bezeichneten Teil, der dazu bestimmt ist, mit einem Wechselstromversorgungsnetz verbunden zu werden, beinhaltet, wobei der Wandler mehrere Zweige umfasst, wobei jeder Zweig einen oberen Teilzweig und einen unteren Teilzweig umfasst, wobei jeder Teilzweig mehrere Teilmodule umfasst, die durch ein Steuerelement des Teilmoduls individuell steuerbar sind, und einen Kondensator umfasst, der in einem gesteuerten Zustand des Steuerelement des Teilmoduls in Reihe in dem Teilzweig verbunden ist, wobei jeder Teilzweig durch eine modellierte Spannungsquelle modelliert werden kann, die einem Aussteuergrad zugeordnet ist, in Abhängigkeit von einer Anzahl von Kondensatoren, die in dem Teilzweig in Reihe geschaltet sind, wobei jede modellierte Spannungsquelle parallel einem modellierten Kondensator zugeordnet ist, der einer Gesamtkapazität des Teilzweigs entspricht, wobei das Verfahren ferner eine langsame Steuerung des Wandlers umfasst, wobei die Spannung an den Klemmen eines jeden modellierten Kondensators eines jeden Zweigs geregelt wird und die Spannung an den Anschlusspunkten des Wandlers an das Gleichstromversorgungsnetz geregelt wird, indem die Steuerelemente der Teilmodule des Wandlers gesteuert werden,
**dadurch gekennzeichnet, dass** es die Berechnung eines Einstellwerts der inneren Energie des Wandlers, die in den Kapazitäten der Teilmodule der Teilzweige gespeichert ist, unter Verwendung einer Funktion, die einen regelbaren Eingangsparameter aufweist, und eine Berechnung eines Einstellwerts der Spannung an den Klemmen eines jeden modellierten Kondensators ausgehend von dem Einstellwert der inneren Energie des Wandlers umfasst, wobei der Einstellwert der Spannung an den Klemmen eines jeden modellierten Wandlers verwendet wird, um die Spannung an den Anschlusspunkten des Wandlers an das Gleichstromversorgungsnetz und die Spannung an den Klemmen eines jeden modellierten Kondensators zu regeln.

12. Verfahren zur Steuerung eines Wandlers nach Anspruch 11, wobei der regelbare Eingangsparameter ein virtueller regelbarer Trägheitskoeffizient $k_{VI}$ ist.

13. Verfahren zur Steuerung eines Wandlers nach Anspruch 12, wobei die Berechnung des Einstellwerts der inneren

Energie $W_{\Sigma}^{*}$ des Wandlers nach der Funktion:

$$W_{\Sigma}^{*} = \frac{1}{2}6C_{tot}k_{VI}\left(v_{dc}^{2} - v_{dc0}^{2}\right) + W_{\Sigma0}^{*}$$

erfolgt, wobei $C_{tot}$ die Gesamtkapazität des modellierten Kondensators in einem Teilzweig ist, $v_{dc}$ die gemessene Spannung des Gleichstromversorgungsnetzes ist, $v_{dc0}$ der Nennwert der Spannung an den Anschlusspunkten des Wandlers an das Gleichstromversorgungsnetz ist und $W_{\Sigma0}^{*}$ ein Nenneinstellwert für den Wert der Energie ist, die in den Kondensatoren des Wandlers gespeichert ist.

14. Verfahren zur Steuerung eines Wandlers nach einem der Ansprüche 11 bis 13, das eine Regelung der Spannung an den Anschlusspunkten des Wandlers an das Gleichstromversorgungsnetz beinhaltet, unter Verwendung eines Resultats eines Vergleichs zwischen einer Vorgabe der Spannung an den Anschlusspunkten des Wandlers an das Gleichstromversorgungsnetz zum Quadrat und einen von dem Gleichstromversorgungsnetz erhobenen Wert ebenfalls zum Quadrat als Eingang, wobei sie einen Einstellwert der Arbeitsleistung des Wandlers liefert.

15. Verfahren zur Steuerung eines Wandlers nach einem der Ansprüche 11 bis 14, das eine Einstellung des Verstärkungsfaktors der Regelung der Spannung an den Anschlusspunkten des Wandlers an das Gleichstromversorgungsnetz in Abhängigkeit von dem Wert des virtuellen Trägheitskoeffizienten beinhaltet.

**Claims**

1. A multilevel modular voltage converter (2) for converting an AC voltage into a DC voltage and vice versa, the converter comprising a DC portion (2C) for connection to a DC power supply network (120) and an AC portion (2A) for connection to an AC power supply network (110), the converter comprising a plurality of legs, each leg comprising an upper arm and a lower arm, each arm comprising a plurality of submodules that are individually controllable by a control member specific to each submodule, and each submodule comprising a capacitor that is connectable in series in the arm when the control member of the submodule is in an ON state, each arm being suitable for modeling as a modeled voltage source associated with a duty ratio depending on a number of capacitors connected in series in the arm, each modeled voltage source being associated in parallel with a modeled capacitor corresponding to a total capacitance of the arm, the converter further comprising a converter control module configured to regulate the voltage across the terminals of each modeled capacitor of each leg and to regulate the voltage across the points of common coupling between the converter and the DC power supply network by controlling said control members of the submodules of the converter,
   **characterized in that** the control module of the converter comprises a computer (10) for computing a setpoint for the internal energy of the converter stored in the capacitors of the submodules of the arms by applying a function having an adjustable input parameter, the control module being configured to deduce from this energy setpoint a setpoint for the voltage across the terminals of each modeled capacitor used for regulating the voltage across the points of common coupling between the converter and the DC power supply network and the voltage across the terminals of each modeled capacitor.

2. A converter according to claim 1, wherein the adjustable input parameter is an adjustable virtual inertia coefficient $k_{VI}$.

3. A converter according to claim 2, wherein the computer (10) is configured to compute the internal energy setpoint $W_{\Sigma}^{*}$ for the converter using the function:

$$W_{\Sigma}^{*} = \frac{1}{2}6C_{tot}k_{VI}\left(v_{dc}^{2} - v_{dc0}^{2}\right) + W_{\Sigma0}^{*}$$

where $C_{tot}$ is the total capacitance of the modeled capacitor in an arm, $v_{dc}$ is the measured voltage of the DC power supply network, $v_{dc0}$ is the nominal value of the voltage across the points of common coupling between the converter and the DC power supply network, and $W_{\Sigma 0}^*$ is a nominal setpoint for the value of the energy stored in the capacitors of the converter.

4. A converter according to any one of claims 1 to 3, wherein the control module includes a regulator (20) for regulating the internal energy of the converter, the regulator having as input the result of a comparison between said setpoint for the voltage across the terminals of each modeled capacitor, when squared, and an average of the squares of the voltages across the terminals of the modeled capacitors, and delivering a power setpoint for the capacitors of said converter.

5. A converter according to any one of claims 1 to 4, wherein the control module is configured to perform a change of variable in order to control intermediate current and voltage variables $i_{diff}$, $i_{gd}$ and $v_{diff}$, $v_{gd}$, where $i_{diff}$ and $v_{diff}$ are associated with the DC power supply network and $i_{gd}$ and $v_{dg}$ are associated with the AC power supply network.

6. A converter according to claim 5, wherein the control module includes a regulator (40) for regulating the current $i_{gd}$ and having as input a setpoint $i_{gd}^*$ corresponding to the current $i_{gd}$.

7. A converter according to claim 5 or claim 6, wherein the control module includes a regulator (50) for regulating the current $i_{diff}$ and having as input a setpoint $i_{diff}^*$ corresponding to the current $i_{diff}$.

8. A converter according to any one of claims 1 to 7, wherein the control module includes a regulator (30) for regulating the voltage across the points of common coupling between the converter and the DC power supply network, the regulator having as input the result of a comparison between a setpoint for the voltage across the points of common coupling between the converter and the DC power supply network, when squared, and a value taken from the DC power supply network, when likewise squared, and delivering a setpoint for the operating power of said converter.

9. A converter according to claims 2 and 8, wherein the control module includes a member (100) for adjusting the gain of the regulator (30) for regulating the voltage across the points of common coupling between the converter and the DC power supply network, as a function of the value of the virtual inertia coefficient $k_{VI}$.

10. A converter according to any one of claims 1 to 9, wherein the control module includes a limiter for limiting the internal energy of the converter, the limiter having as input the internal energy of the converter, a setpoint for the maximum internal energy of the converter, and a setpoint for the minimum internal energy of the converter, and delivering a limit power setpoint.

11. A method of controlling a multilevel modular voltage converter, the converter serving to convert an AC voltage into a DC voltage, and vice versa, and including a DC portion for connection to a DC power supply network and an AC portion for connection to an AC power supply network, the converter having a plurality of legs, each leg comprising an upper arm and a lower arm, each arm having a plurality of submodules that are individually controllable by a control member of the submodule and comprising a capacitor connected in series in the arm when the control member of the submodule is in an ON state, each arm being suitable for being modeled by a modeled voltage source associated with a duty ratio depending on a number of capacitors connected in series in the arm, each modeled voltage source being associated in parallel with a modeled capacitor corresponding to a total capacitance of the arm, the method further comprising slow control of the converter in which the voltage across the terminals of each modeled capacitor of each leg is regulated and the voltage across the points of common coupling between the converter and the DC power supply network is regulated by controlling said control members of the submodules of the converter,
**Characterized in that** said method comprises calculating a setpoint for the internal energy of the converter stored in the capacitors of the submodules of the arms by using a function having an adjustable input parameter, and calculating a setpoint for the voltage across the terminals of each modeled capacitor from said setpoint for the internal energy of the converter, the setpoint for the voltage across the terminals of each modeled capacitor being used for regulating the voltage across the points of common coupling between the converter and the DC power supply network and the voltage across the terminals of each modeled capacitor.

12. A method according to claim 11 for controlling a converter, wherein the adjustable input parameter is an adjustable virtual inertia coefficient $k_{VI}$.

13. A method according to claim 12, wherein the setpoint $W_\Sigma^*$ for the internal energy of the converter is calculated from the following function:

$$W_\Sigma^* = \frac{1}{2} 6 C_{tot} k_{VI} \left( v_{dc}^2 - v_{dc0}^2 \right) + W_{\Sigma 0}^*$$

where $C_{tot}$ is the total capacitance of the modeled capacitor in an arm, $v_{dc}$ is the measured voltage of the DC power supply network, $v_{dc0}$ is the nominal value of the voltage across the points of common coupling between the converter and the DC power supply network, and $W_{\Sigma 0}^*$ is a nominal setpoint for the value of the energy stored in the capacitors of the converter.

14. A method according to any one of claims 11 to 13 for controlling a converter, the method including regulating the voltage across the points of common coupling between the converter and the DC power supply network by using as input the result of a comparison between a setpoint for the voltage across the points of common coupling between the converter and the DC power supply network, when squared, and a value taken from the DC power supply network, when likewise squared, and delivering a setpoint for the operating power of said converter.

15. A method according to any one of claims 11 to 14 for controlling a converter, the method including adjusting the gain for regulating the voltage across the points of common coupling between the converter and the DC power supply network, as a function of the value of the virtual inertia coefficient.

FIG.1

ART ANTERIEUR

## FIG.2
## ART ANTERIEUR

## FIG.3
## ART ANTERIEUR

FIG.4
ART ANTERIEUR

FIG.5

FIG.6

FIG.7

$$v_{dc}^{2*} \longrightarrow \bigotimes_{+}^{\ } \longrightarrow \boxed{PI} \longrightarrow \boxed{\dfrac{2}{(C_{dc} + C_{VI})s}} \longrightarrow v_{dc}^{2}$$

## FIG.8

## FIG.9A

FIG.9B

FIG.9C

FIG.9D

FIG.10A

FIG.10B

# FIG.10C

# FIG.10D

FIG.11

EP 3 332 474 B1

**EP 3 332 474 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SAMIMI et al.** Control of DC bus voltage with a Modular Multilevel Converter. *conférence PowerTech,* 2015

- *Control of DC bus voltage with a Modular Multilevel Converter*